# EUROPÄISCHE PATENTANMELDUNG

(11) **EP 2 886 584 A1**
(43) Veröffentlichungstag der Anmeldung: **24.06.2015**
(21) Anmeldenummer: 13198404.9
(22) Anmeldetag: 19.12.2013
(51) Int. Cl.: C08G 77/18, C08L 83/04, C08K 3/18

(54) **Kondensationsvernetzende Silikone mit verbesserter Temperaturstabilität**

(71) Anmelder: Sika Technology AG, 6340 Baar (CH)
(72) Erfinder: von Malotki, Christian, 8967 Widen (CH); Friedel, Manuel, 8048 Zürich (CH)
(74) Vertreter: Sika Patent Attorneys

(57) **Zusammenfassung**

Die Erfindung betrifft eine Silikonformulierung, umfassend a) mindestens ein kondensationsvernetzbares Hydroxy- oder Alkoxy-terminiertes Polydiorganosiloxan, b) mindestens einen Silan- oder Siloxan-Vernetzer für das Hydroxyoder Alkoxy-terminierte Polydiorganosiloxan und c) einen oder mehrere Füllstoffe, wobei ein Füllstoff der Hauptfüllstoff ist, der in einem größeren Gewichtsanteil als jeder andere gegebenenfalls vorhandene Füllstoff in der Silikonformulierung enthalten ist, und der Hauptfüllstoff eine Zersetzungstemperatur von mehr als 350°C aufweist, mit der Maßgabe, dass, bezogen auf das Gesamtgewicht der Füllstoffe, der Anteil des Hauptfüllstoffs mindestens 20 Gew.-% beträgt.

Die Silikonformulierung eignet sich insbesondere als elastischer Klebstoff oder Dichtstoff, insbesondere für Hochtemperaturanwendungen, z.B. für die Herstellung oder Reparatur von Fassaden, Brandschutzfugen, Fenstern, Isolierglas, Solaranlagen, Fahrzeugen, weisser, brauner und roter Ware, elektronischen Bauteilen, Sanitäranlagen oder für den Bau.

## Beschreibung

### Technisches Gebiet

Die Erfindung betrifft ein- oder zweikomponentige Silikonformulierungen, insbesondere RTV-Silikone und deren Verwendung.

### Stand der Technik

Silikone sind bekannte Zusammensetzungen, welche schon lange als Kleb- oder Dichtstoffe eingesetzt werden. Solche Silikone können als ein- oder zweikomponentige Silikonformulierungen gestaltet werden und enthalten als Hauptkomponenten ein Polyorganosiloxan und einen Vernetzer. Es wird zwischen kaltvernetzenden RTV-Silikonen (RTV = raumtemperaturvernetzend bzw. -vulkanisierend) und warmvernetzenden HTV-Silikonen (HTV = hochtemperaturvernetzend bzw. -vulkanisierend) unterschieden. Ein- und zweikomponentige RTV-Silikone werden auch als RTV 1-Silikone bzw. RTV 2-Silikone bezeichnet.

Ein genereller Vorteil bei der Verwendung von Silikonen gegenüber auf organischen Reaktionsharzen basierenden Polymeren, ist die geringere Temperaturempfindlichkeit der Silikone. In der Vergangenheit hat es nicht an Anstrengungen gefehlt, Silikonformulierungen zu finden, die eine noch weiter verbesserte Temperaturstabilität aufweisen. So sind heute beispielsweise Silikonformulierungen bekannt, die zur Beschichtung von Bratpfannen verwendet werden können. Diese basieren normalerweise auf Additionsvernetzung als Aushärtemechanismus oder es handelt sich um HTV-Silikone.

Weiter sind Silikonformulierungen zum Verguss elektronischer Bauteile wie LED bekannt, die eine erhöhte Temperaturstabilität haben. Auch diese basieren normalerweise auf Additionsvernetzung als Aushärtemechanismus.

Kondensationsvernetzende, feuchtigkeitshärtende Silikone oder RTV-Silikone sind an sich lange bekannt. Auch in diesem Bereich hat es Anstrengungen gegeben, Formulierungen mit verbesserter Temperaturstabilität zu finden. Diese basieren oft auf sauer vernetzenden Systemen, wodurch ein Einsatz auf empfindlichen und oxidierbaren Oberflächen eingeschränkt wird und/oder Massnahmen wie beispielsweise Vorbehandlungen nötig werden, die wiederum Kosten verursachen.

US 4769412 beschreibt die Verwendung von Industrieruß und Eisenoxid zur Verbesserung der Temperaturstabilität von feuchtigkeitshärtenden Silikonen.

US 5932650 beschreibt die Verwendung von Eisencarboxylaten zur Verbesserung der Temperaturstabilität von einkomponentigen feuchtigkeitshärtenden Silikonen.

EP-A1-1361254 betrifft die Verwendung spezieller verzweigter Polysiloxane zur Verbesserung der Temperaturstabilität von feuchtigkeitshärtenden Silikonen.

In US 5352752 wird die Verwendung von Polymeren mit mindestens teilweise fluorierten Polymereinheiten und Siloxan-Polymereinheiten zur Verbesserung der Temperaturstabilität von feuchtigkeitshärtenden Silikonen beschrieben.

Die beschrieben Ansätze haben den Nachteil dass sie entweder nicht die erwünscht hohe Temperaturstabilität erreichen oder im industriellen Maßstab umgesetzt zu teuer sind.

### Darstellung der Erfindung

Aufgabe der vorliegenden Erfindung ist die Bereitstellung einer Silikonformulierung mit verbesserter Temperaturstabilität in ausgehärteten Zustand und breitem Einsatzgebiet, die die vorstehend beschriebenen Nachteile überwindet. Insbesondere sollten die elastischen und mechanischen Eigenschaften, insbesondere die Zugfestigkeit, der Silikonformulierung im ausgehärteten Zustand im Wesentlichen beibehalten werden, auch wenn sie erhöhten Temperaturen ausgesetzt wird.

Überraschenderweise wurde nun gefunden, dass die erwünschte Temperaturstabilität bei Silikonen, die neutral- und feuchtigkeitsvernetzbar sein können, erreicht werden kann, wenn man als Hauptfüllstoff nur solche Füllstoffe verwendet, die eine Zersetzungstemperatur von größer 350°C haben. Weiter wurde überraschenderweise gefunden, dass gerade die Langzeitstabilität noch weiter verbessert werden kann, wenn man weichmacherfrei arbeitet. Anders als bei bekannten silikonbasierten Produkten brechen die mechanischen Eigenschaften bei hohen Temperaturen wenig bis gar nicht ein und die Elastomere behalten weiterhin ihre Elastizität.

Die Aufgabe wird somit gelöst durch eine Silikonformulierung, umfassend a) mindestens ein kondensationsvernetzbares Hydroxy- oder Alkoxy-terminiertes Polydiorganosiloxan, b) mindestens einen Silan- oder Siloxan-Vernetzer für das Hydroxy- oder Alkoxy-terminierte Polydiorganosiloxan und c) einen oder mehrere Füllstoffe, wobei ein Füllstoff der Hauptfüllstoff ist, der in einem größeren Gewichstanteil als jeder andere gegebenenfalls vorhandene Füllstoff in der Silkonformulierung enthalten ist, und der Hauptfüllstoff eine Zersetzungstemperatur von mehr als 350°C aufweist, mit der Maßgabe, dass, bezogen auf das Gesamtgewicht der Füllstoffe, der Anteil des Hauptfüllstoffs mindestens 20 Gew.-% beträgt.

Die erfindungsgemäße Silikonformulierung zeigt eine überraschend hohe Temperaturstabilität im gehärteten Zustand. Selbst bei Temperaturen von z.B. über 250°C über einen längeren Zeitraum werden die elastischen und mechanischen Eigenschaften, insbesondere die Zugfestigkeit, kaum beeinträchtigt. Überraschenderweise war es auch möglich, mit geringen Mengen Weichmacher oder sogar im Wesentlichen weichmacherfrei zu arbeiten, wodurch die Langzeittemperaturstabilität sogar noch verbessert wurde.

Die Erfindung betrifft auch die Verwendung der Silikonformulierung als Klebstoff, Dichtstoff oder Vergussmasse sowie das aus der Silikonformulierung durch Härtung mit Wasser erhältliche Produkt. Die bevorzugten Ausführungsformen sind jeweils in den abhängigen Ansprüchen angegeben. Im Folgenden wird die Erfindung ausführlich erläutert.

### Weg zur Ausführung der Erfindung

Der Begriff "Silan" bzw. "Organosilan" bezieht sich auf Siliciumverbindungen, welche einerseits mindestens eine, üblicherweise zwei oder drei direkt an das Siliciumatom gebundene hydrolysierbare Gruppen, z.B. Alkoxy-, Acyloxy- oder Ketoximogruppen, aufweisen, und andererseits mindestens einen, über eine Si-C-Bindung, direkt an das Siliciumatom gebundenen organischen Rest aufweisen. Die organischen Reste können einen oder mehrere Heteroatome wie N, O, S oder F enthalten und/oder aromatische oder olefinische Gruppen enthalten. Silane, die z.B. Alkoxygruppen aufweisen, sind dem Fachmann auch als Alkoxysilane bekannt. Der Begriff Silan umfasst hier aber auch Siliciumverbindungen, die nur hydrolysierbare Gruppen enthalten, wie z.B. Tetraalkoxysilane. Ferner umfasst der Ausdruck Silane auch wie üblich Siliciumverbindungen, die mindestens eine Si-H Bindung aufweisen.

Die Silane haben die Eigenschaft, bei Kontakt mit Feuchtigkeit bzw. Wasser zu hydrolysieren. Dabei werden hydrolysierbare Gruppen des Silans unter Bildung einer oder mehrerer Silanolgruppen (Si-OH-Gruppen) hydrolysiert. Die Silanolgruppen sind reaktiv und kondensieren miteinander oft spontan unter Bildung von Siloxangruppen (Si-O-Si-Gruppen), wobei Wasser abgespalten wird. Die so gebildeten, Siloxangruppen enthaltenden Kondensationsprodukte werden als Organosiloxane bzw. Siloxane bezeichnet.

Die hier angegebenen Viskositäten können in Anlehnung an DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0,5 s⁻¹.

Unter Raumtemperatur wird hier eine Temperatur von 23°C verstanden.

Die Silikonformulierung umfasst mindestens ein Hydroxy- oder Alkoxy-terminiertes Polydiorganosiloxan. Solche Hydroxy- oder Alkoxy-terminierte Polydiorganosiloxane sind kondensationsvernetzbar. Ausserdem können die Hydroxy- oder Alkoxy-terminierte Polydiorganosiloxane eine oder mehrere Verzweigungen enthalten. Bevorzugt handelt es sich aber um lineare Hydroxy- oder Alkoxy-terminierte Polydiorganosiloxane. Diese Polydiorganosiloxane sind dem Fachmann gut bekannt.

Bei der Silikonformulierung kann es sich wie in der Technik üblich um eine einkomponentige oder eine zweikomponentige Silikonformulierung handeln. Insbesondere handelt es sich bei der erfindungsgemäßen Silikonformulierung um eine feuchtigkeitshärtende Silikonformulierung.

Feuchtigkeitshärtende Silikonformulierungen härten bei Anwesenheit von Wasser, z.B. in Form von Luftfeuchtigkeit, aus. Bei der Härtung mit Wasser finden die vorstehend beschriebenen Hydrolyse- und Kondensationsreaktionen zwischen den Polydiorganosiloxanen und dem Vernetzer statt, welche gegebenenfalls durch Katalysatoren unterstützt werden, wobei unter Bildung von Siloxanbindungen eine Vernetzung stattfindet. Die Härtung wird daher auch als Vernetzung bezeichnet.

Hierbei ist für die Härtung keine erhöhte Temperatur erforderlich, weswegen die Silikonformulierungen auch als kaltvernetzende RTV-Silikone bezeichnet werden. RTV-Silikonformulierungen können bei Anwesenheit von Wasser wie Luftfeuchtigkeit auch bei Raumtemperatur gehärtet werden. Bei der erfindungsgemäßen Silikonformulierung handelt es sich bevorzugt um eine RTV 1-Silikonformulierung (einkomponentige raumtemperaturvernetzende Silikonformulierung) oder eine RTV 2-Silikonformulierung (zweikomponentige raumtemperaturvernetzende Silikonformulierung).

Bei einer einkomponentigen feuchtigkeitshärtenden Silikonformulierung beginnt der Härtungsprozess, wenn sie Wasser bzw. Luftfeuchtigkeit ausgesetzt wird. Bei einer zweikomponentigen feuchtigkeitshärtenden Silikonformulierung beginnt der Härtungsprozess, wenn die beiden Komponenten miteinander vermischt werden und die Mischung Wasser bzw. Luftfeuchtigkeit ausgesetzt wird, wobei das Wasser auch in einer der beiden Komponenten enthalten sein kann.

Das Hydroxy- oder Alkoxy-terminierte Polydiorganosiloxan, welches bevorzugt linear ist, weist an den beiden Endgruppen jeweils mindestens eine Hydroxy- oder Alkoxygruppe auf, die an ein Si-Atom gebunden ist. Das Hydroxy- oder Alkoxy-terminierte Polydiorganosiloxan für die erfindungsgemäße Silikonformulierung ist bevorzugt ein Polydiorganosiloxan der Formel (I) 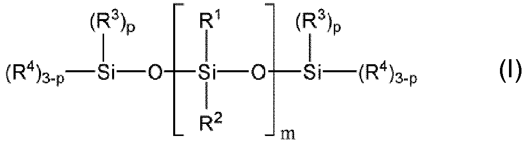 worin
R¹, R² und R³ unabhängig voneinander lineare oder verzweigte, einwertige Kohlenwasserstoffreste mit 1 bis 12 C-Atomen sind, welche gegebenenfalls ein oder mehrere Heteroatome und gegebenenfalls cycloaliphatische und/oder aromatische Anteile aufweisen,
R⁴ unabhängig voneinander Hydroxylgruppen oder Alkoxygruppen mit 1 bis 13 C-Atomen, welche gegebenenfalls ein oder mehrere Heteroatome und gegebenenfalls eine oder mehrere C-C-Mehrfachbindungen und/oder gegebenenfalls cycloaliphatische und/oder aromatische Anteile aufweisen, ist, der Index p ein Wert von 0, 1 oder 2 ist, und
der Index m so gewählt ist, dass das Polydiorganosiloxan bei einer Temperatur von 23°C eine Viskosität im Bereich von 10 bis 500'000 mPa·s, bevorzugt von 100 bis 350'000 mPa·s und insbesondere von 5'000 bis 120'000 mPa.s aufweist. Ausserdem kann das Hydroxy- oder Alkoxy-terminierte Polydiorganosiloxan eine oder mehrere Verzweigungen in der Kette aufweisen. Es handelt sich aber bevorzugt um ein lineares Hydroxy- oder Alkoxy-terminiertes Polydiorganosiloxan.

Bevorzugt sind Polydiorganosiloxane der Formel (I), worin
R¹ und R² unabhängig voneinander ein Alkyl mit 1 bis 5, bevorzugt 1 bis 3, C-Atomen, insbesondere Methyl, sind,
R³ ein Alkyl mit 1 bis 5, bevorzugt 1 bis 3, C-Atomen, insbesondere Methyl, Vinyl oder Phenyl ist, wobei R³ bevorzugt Methyl ist,
R⁴ eine Hydroxygruppe oder eine Alkoxygruppe mit 1 bis 5 C-Atomen, bevorzugt eine Methoxy-, Ethoxy-, Propoxy- oder Butoxygruppe und insbesondere eine Methoxy- oder Ethoxygruppe ist,
der Index p ein Wert von 0, 1 oder 2 ist, wobei p bevorzugt 2 ist, wenn R⁴ eine Hydroxygruppe ist, und p bevorzugt 0 oder 1, bevorzugter 0, ist, wenn R⁴ eine Alkoxygruppe ist, und
der Index m so gewählt ist, dass das Polydiorganosiloxan bei einer Temperatur von 23°C eine Viskosität im Bereich von 10 bis 500'000 mPa·s, bevorzugt von 100 bis 350'000 mPa·s und insbesondere von 5'000 bis 120'000 mPa.s aufweist.

Das Hydroxy- oder Alkoxy-terminierte Polydiorganosiloxan, welches bevorzugt linear ist, ist bevorzugt ein Hydroxy- oder Alkoxy-terminiertes Polydialkylsiloxan, insbesondere ein Hydroxy- oder Alkoxy-terminiertes Polydimethylsiloxan, welches bevorzugt eine Viskosität bei einer Temperatur von 23°C im Bereich von 10 bis 500'000 mPa·s, bevorzugt von 100 bis 350'000 mPa·s und insbesondere von 5'000 bis 120'000 mPa.s aufweist. Bevorzugte Alkylgruppen und Alkoxygruppen sind die gleichen wie sie vorstehend für das Polydiorganosiloxan der Formel (I) für R¹ und R² bzw. R⁴ angegeben wurden.

Wie dem Fachmann bekannt, können Polydialkylsiloxane bzw. Polydimethylsiloxane zur Einstellung der Eigenschaften modifiziert werden, indem ein Teil der Alkyl- bzw. Methylgruppen durch andere Gruppen, wie z.B. Vinyl oder Phenyl, ersetzt ist.

Die Gesamtmenge an Hydroxy- oder Alkoxy-terminierten Polydiorganosiloxanen, die bevorzugt linear sind, insbesondere Hydroxy- oder Alkoxy-terminierten Polydialkylsiloxanen bzw. Polydimethylsiloxanen, kann in breiten Bereichen variieren, beträgt aber vorzugsweise 15 bis 70 Gew.-% oder 20 bis 70 Gew.-% und bevorzugt 30 bis 60 Gew.-%, bezogen auf die gesamte Silikonformulierung.

Die Silikonformulierung umfasst ferner einen oder mehrere Silan- oder Siloxan-Vernetzer für das Hydroxy- oder Alkoxy-terminierte Polyorganosiloxan, wobei ein Silan-Vernetzer bevorzugt ist. Solche Vernetzer für Silikonformulierungen sind bekannt. Es handelt sich dabei um Silane mit zwei oder mehr, in der Regel mit drei oder mehr hydrolysierbaren Gruppen, oder Hydrolyse- oder Kondensationsprodukte davon, wobei die Kondensationsprodukte die Siloxan-Vernetzer darstellen. Weiter können geeignete Silan-Vernetzer auch Hydride sein, also Si-H Bindungen enthalten.

Beispiele für bevorzugte hydrolysierbare Gruppen sind Alkoxygruppen, wie C₁₋₅-Alkoxygruppen, bevorzugt Methoxy-, Ethoxy-, Propoxygruppen und Butoxygruppen, bevorzugter Methoxy- oder Ethoxygruppen, Acetoxygruppen, Amidogruppen, bevorzugt N-Alkylamidogruppen, insbesondere N-Methylbenzamid- oder N-Methylacetamidogruppen, und Ketoximogruppen. Die hydrolysierbaren Gruppen sind bevorzugter Alkoxygruppen, Acetoxygruppen oder Ketoximogruppen.

Bevorzugte Ketoximogruppen sind Dialkylketoximogruppen, deren Alkylgruppen jeweils 1 bis 6 C-Atome aufweisen. Vorzugsweise stehen die beiden Alkylgruppen der Dialkylketoximogruppen unabhängig voneinander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl-, n-Propyl- oder für eine iso-Butylgruppe steht. Meist bevorzugt steht die Ketoximogruppe für eine Ethyl-methylketoximogruppe.

Die Silikonformulierung ist bevorzugt eine neutral vernetzende Silikonformulierung. D.h. es werden beim Härtungsprozess im Wesentlichen keine sauren Verbindungen, wie z.B. Essigsäure, oder basischen Verbindungen freigesetzt. Der Silan- oder Siloxan-Vernetzer umfasst daher besonders bevorzugt Hydroxy-, Alkoxy- oder Ketoximogruppen. Der Silan- oder Siloxan-Vernetzer ist vorzugsweise frei von Acetoxygruppen.

Der Silan-Vernetzer kann z.B. eine der folgenden allgemeinen Formeln (II) bis (IV) aufweisen

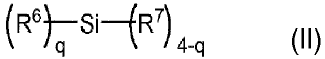

(R⁷)₃-Si-R⁸-Si-(R⁷)₃ (III)

N(H)ₙ(-R⁸-Si-(R⁷)₃)₃₋ₙ (IV)

worin R⁶ unabhängig voneinander ein linearer oder verzweigter, einwertiger Kohlenwasserstoffrest mit 1 bis 12 C-Atomen ist, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist,
R⁷ unabhängig voneinander eine Alkoxy-, Acetoxy-, Amido- oder Ketoximogruppe mit jeweils 1 bis 13 C-Atomen ist, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen,
der Index q 0, 1 oder 2, bevorzugt 0 oder 1, insbesondere 1, ist,
R⁸ ein zweiwertiger Kohlenwasserstoffrest mit 1 bis 12 C-Atomen, der gegebenenfalls ein oder mehrere Heteroatome aufweist, insbesondere eine zweiwertige Alkylengruppe, z.B. eine C₁₋₆-Alkylengruppe, insbesondere Methylen, Ethylen oder Propylen, eine Arylengruppe, wie Phenylen, oder eine Cycloalkylengruppe, ist, und
der Index n 0 oder 1, bevorzugt 1, ist.

Bevorzugte Beispiele für R⁶ sind Alkylgruppen mit 1 bis 5 C-Atomen, bevorzugt Methyl, Ethyl oder Propyl, Vinyl, Arylgruppen, wie Phenyl, Cycloalkylgruppen, wie Cyclohexyl, sowie substituierte Alkylgruppen mit 1 bis 8 C-Atomen, bevorzugt Methyl, Ethyl oder Propyl, die mit einem oder mehreren Substituenten, wie Halogen wie Chlor, gegebenenfalls, substituiertes Amino (NH₂, NHR, NR₂, wobei R unabhängig voneinander Alkyl, Aryl oder Cycloalkyl ist), Mercapto, Glycidoxy, Methacrylat, Acrylat oder Carbamato, funktionalisiert sind.

Bevorzugte Alkoxy-, Acetoxy-, Amido- oder Ketoximogruppen, die für den Substituenten R⁷ geeignet sind, wurden bereits vorstehend genannt, worauf Bezug genommen wird.

Besonders bevorzugt ist der Silan-Vernetzer ein Organotrialkoxysilan, Organotriacetoxysilan und/oder Organotriketoximosilan. Beispiele für geeignete Silane als Vernetzer sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, 2-Aminoethyl-3-aminopropyltrimethoxysilan, 2-Aminoethyl-3-aminopropyltriethoxysilan, N-Phenylaminomethyltrimethoxysilan, 3-Glycidoxypropyltrimethoxysilan, Bis-(N-methylacetamido)methylethoxysilan, Tris-(methylethylketoximo)methylsilan, Tris-(methylethylketoximo)vinylsilan, Tris-(methylethylketoximo)phenylsilan, N,N-Bis-(triethoxysilylpropyl)amin, N,N-Bis-(trimethoxysilylpropyl)amin oder 1,2-Bis-(triethoxysilyl)ethan.

Weiterhin können die Silane auch bereits teilweise oder vollständig hydrolysiert (ein Teil oder alle R⁷ = OH) vorliegen. Aufgrund ihrer stark erhöhten Reaktivität kann ihr Einsatz als Vernetzer vorteilhaft sein. Dem Fachmann ist bekannt, dass es beim Einsatz von teilweise oder vollständig hydrolysierten Silanen zur Bildung von oligomeren Siloxanen, z.B. von Dimeren und/oder Trimeren oder höheren Homologen, kommen kann, welche durch Kondensation von hydrolysierten Silanen gebildet werden.

Dementsprechend können auch Siloxan-Vernetzer, die durch Hydrolyse- und Kondensationsreaktionen aus den vorstehend genannten Silanen erhältlich sind, für die Silikonformulierung eingesetzt werden. Beispiele für als Vernetzer geeignete Siloxane sind Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan. Die Siloxane können auch aus der Hydrolyse und Kondensation von zwei oder mehr Silanen gebildet werden.

Als Vernetzer für die Silikonzusammensetzung kann auch eine beliebige Mischung der vorhergehend genannten Silane und/oder Siloxane eingesetzt werden.

Die Gesamtmenge an Silanen und/oder Siloxanen als Vernetzer für das Polydiorganosiloxan kann in breiten Bereichen variieren, beträgt aber vorzugsweise 0,1 bis 15 Gew.-% und bevorzugt 1 bis 10 Gew.-% der gesamten Silikonformulierung. Silane können in der Silikonformulierung auch zusätzlich oder hauptsächlich andere Aufgaben erfüllen, z.B. als Haftvermittler, wie weiter unten erläutert. Die vorstehende Mengenangabe bezieht sich auf alle in der Silikonformulierung enthaltene Silane sowie Siloxan-Vernetzer.

Wenn die Silikonformulierung eine zweikomponentige Silikonformulierung ist, ist es bevorzugt, dass das mindestens eine Polydiorganosiloxan in einer Komponente vorliegt (Polymerkomponente A), und der Silan- oder Siloxan-Vernetzer in der anderen Komponente (Härterkomponente B).

Die Silikonformulierung umfasst ferner einen oder mehrere Füllstoffe, wobei ein Füllstoff der Hauptfüllstoff ist, der in einem größeren Gewichtsanteil als jeder andere gegebenenfalls vorhandene Füllstoff in der Silikonformulierung enthalten ist, und der Hauptfüllstoff eine Zersetzungstemperatur von mehr als 350°C aufweist, mit der Maßgabe, dass, bezogen auf das Gesamtgewicht der Füllstoffe, der Anteil des Hauptfüllstoffs mindestens 20 Gew.-% beträgt.

Durch den Einsatz von Füllstoffen können im Allgemeinen z.B. sowohl rheologische Eigenschaften der nicht ausgehärteten Formulierung als auch die mechanischen Eigenschaften und die Oberflächenbeschaffenheit der ausgehärteten Formulierung beeinflusst werden. Es können ein oder mehrere Füllstoffe eingesetzt werden, wobei es von Vorteil sein kann, eine Mischung verschiedener Füllstoffe, z.B. drei oder mehr oder vier oder mehr Füllstoffe, einzusetzen.

Von dem einen oder den mehreren Füllstoffen ist ein Füllstoff in einem Gewichtsanteil, bezogen auf die Silikonformulierung, enthalten, der größer ist als der Gewichtsanteil von jedem anderen gegebenenfalls vorhandenen Füllstoff. Dieser Füllstoff ist der Hauptfüllstoff. Sofern nur ein Füllstoff vorhanden ist, stellt dieser natürlich den Hauptfüllstoff dar.

Durch den Einsatz eines Hauptfüllstoffs mit einer Zersetzungstemperatur von mehr als 350°C in einer Menge von mindestens 20 Gew.-%, bezogen auf das Gesamtgewicht der eingesetzten Füllstoffe, wird überraschenderweise ein deutlich verbesserte Temperaturstabilität der gehärteten Silikonformulierung erreicht.

Unter einem Füllstoff mit einer Zersetzungstemperatur von mehr als 350°C wird hier ein Füllstoff verstanden, der bei Erwärmen bis zu 350°C keine Phasenumwandlung, Abspaltung von Gasen, Kalzinierung oder ähnliches erfährt. Zersetzungstemperaturen verschiedener Füllstoffe sind dem Fachmann bekannt und sind z.B. angegeben in "P. Hornsby: Fire-Retardant Fillers in Fire retardancy of Polymeric Materials, C.A. Wilkie, A.B. Morgan, Ed., CRC Press Taylor & Francis Group, Boca Raton, USA, 2. Auflage, 2010, S. 165".

Beispiele für Füllstoffe mit einer Zersetzungstemperatur von mehr als 350°C sind Calciumhydroxid, natürliche, gemahlene oder gefällte Calciumcarbonate und/oder Dolomite, welche gegebenenfalls mit Fettsäuren, insbesondere Stearinsäure, beschichtet sind, Kieselsäuren, insbesondere hochdisperse Kieselsäuren aus Pyrolyseprozessen, Russ, insbesondere industriell hergestellter Russ, calcinierte Kaoline, Aluminiumoxide, wie Boehmit, Aluminiumsilicate, Magnesium-Aluminiumsilicate, Zirkoniumsilicate, Quarzmehl, Cristobalitmehl, Diatomeenerde, Glimmer, Eisenoxide, Titanoxide, Zirconiumoxide. Diese Füllstoffe sind als Hauptfüllstoff geeignet.

Es ist aber bevorzugt, dass die Silikonformulierung keine Eisenoxide und/oder keine Titanoxide als Füllstoffe enthält, wobei die Silikonformulierung bevorzugt frei von Eisenoxiden ist und besonders bevorzugt frei von Eisenoxiden und frei von Titanoxiden ist.

Besonders bevorzugte Füllstoffe mit einer Zersetzungstemperatur von mehr als 350°C, die als Hauptfüllstoff eingesetzt werden können, sind Dolomite, z.B. natürliche, gemahlene oder gefällte Dolomite, welche gegebenenfalls mit Fettsäuren, insbesondere Stearinsäure, beschichtet sind, Aluminiumoxide, insbesondere Boehmit, Quarz, insbesondere Quarzmehl, Cristobalit, insbesondere Cristobalitmehl, Diatomeenerde, welche gegebenenfalls z.B. mit Silanen oberflächenmodifiziert sind, und Glimmer, wobei Dolomite und Diatomeenerde besonders bevorzugt sind. Durch den Einsatz dieser bevorzugten Füllstoffe als Hauptfüllstoff, die gegebenenfalls oberflächenmodifiziert sein können, wird überraschenderweise eine besonders gute Temperaturstabilität erreicht, insbesondere hinsichtlich der Zugfestigkeit.

Bei dem Dolomit kann es sich um natürliche, gemahlene oder gefällte Dolomite handeln. Bei dem Dolomit kann es sich z.B. um Gesteine bzw. Dolomitsteine oder das Mineral handeln. Dolomit als Mineral ist CaMg[(CO₃)]₂. Dolomitsteine wie Dolomitmarmor können neben CaMg[(CO₃)]₂ noch andere Bestandteile, wie Kalk, enthalten.

Der Anteil des Hauptfüllstoffs mit einer Zersetzungstemperatur von mehr als 350°C, bezogen auf das Gesamtgewicht der eingesetzten Füllstoffe in der gesamten Silikonformulierung, beträgt mindestens 20 Gew.-%, bevorzugt mindestens 30 Gew.-% und bevorzugter mindestens 50 Gew.-% und kann auch bis zu 100 Gew.-% betragen, er beträgt aber bevorzugt 20 bis 90 Gew.- %, bevorzugter 30 bis 90 Gew.-% und besonders bevorzugt 50 bis 75 Gew.-%.

Neben dem Hauptfüllstoff können ein oder mehrere weitere Füllstoffe in der Silikonformulierung enthalten sein, was in der Regel auch bevorzugt ist. Die weiteren Füllstoffe können Füllstoffe mit einer Zersetzungstemperatur von mehr als 350°C und/oder Füllstoffe mit einer Zersetzungstemperatur von nicht mehr als 350°C, bevorzugt unter 300°C, sein.

Beispiele für Füllstoffe mit einer Zersetzungstemperatur von mehr als 350°C wurden vorstehend genannt. Beispiele für Füllstoffe mit einer Zersetzungstemperatur unter 350°C, bevorzugt unter 300 °C, sind anorganische oder organische Füllstoffe, wie Aluminiumhydroxide, Gips, basisches Magnesiumcarbonat und Magnesiumhydroxid, deren Oberfläche gegebenenfalls mit einem Hydrophobierungsmittel behandelt ist. Der Einsatz von einem oder mehreren Füllstoffen mit einer Zersetzungstemperatur unter 350°C, bevorzugt unter 300 °C, kann in manchen Ausführungsformen bevorzugt sein.

Die Füllstoffe mit einer Zersetzungstemperatur von mehr als 350°C, einschließlich des Hauptfüllstoffs, können gegebenenfalls oberflächenmodifiziert sein. Solche Oberflächenmodifizierungen von Füllstoffen sind in der Technik üblich, um z.B. bestimmte Eigenschaften der Füllstoffe, z.B. deren hydrophilen oder hydrophoben Eigenschaften, zu modifizieren. Zur Oberflächenmodifizierung werden die Füllstoffe gewöhnlich mit einer organischen Verbindung, z.B. die vorstehend erläuterten Silane, behandelt, wodurch sie sich an die Oberfläche der Füllstoffteilchen anlagern oder anbinden. Für die Bestimmung des Gewichts der Füllstoffe wird eine solche Oberflächenmodifizierung berücksichtigt.

Die Gesamtmenge an Füllstoffen kann in breiten Bereichen variieren, beträgt aber vorzugsweise 10 bis 80 Gew.-% und bevorzugt 15 bis 75 Gew.-%, bezogen auf die gesamten Silikonformulierung.

Bei der zweikomponentigen Silikonformulierung können die Füllstoffe nur in einer der beiden Komponente enthalten sein. Es ist aber gewöhnlich bevorzugt, dass ein Teil der Füllstoffe in einer Komponente und ein Teil der Füllstoffe in der anderen Komponente enthalten sind.

Die Silikonformulierung kann gegebenenfalls weitere Bestandteile enthalten, wie sie für ein- oder zweikomponentige Silikonformulierungen üblich sind. Derartige zusätzliche Bestandteile sind z.B. Weichmacher, Haftvermittler, Katalysatoren sowie weiter übliche Additive wie z.B. Biozide, Duftstoffe, Thixotropiermittel, Trocknungsmittel und Farbpigmente und weitere dem Fachmann bekannte gängige Additive.

Die Silikonformulierung enthält bevorzugt mindestens einen Katalysator für die Vernetzung des Polyorganosiloxans. Geeignete Katalysatoren sind im Handel erhältlich. Als Katalysatoren eignen sich z.B. Metallkatalysatoren. Metallkatalysatoren können Verbindungen und Komplexe von Elementen der Hauptgruppen I, II, III und IV sowie der Nebengruppen I, II, IV, VI und VII des Periodensystems der Elemente sein. Beispiele für bevorzugte Katalysatoren sind zinnorganische Verbindungen und/oder Titanate bzw. Organotitanate. Es ist möglich und in gewissen Fällen sogar bevorzugt, Mischungen verschiedener Katalysatoren einzusetzen.

Bevorzugte zinnorganische Verbindungen sind Dialkylzinnverbindungen, z.B. Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-octylzinndi-2-ethylhexanoat, Di-n-octylzinndi-2,2-dimethyloctanoat, Di-n-octylzinndimaleinat, Di-n-octylzinn-dilaurat, Di-n-butylzinnoxid und Di-n-octylzinnoxid.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei bevorzugt diejenigen, welche ausgewählt sind aus der Gruppe bestehend aus Alkoxy, Sulfonat, Carboxylat, Dialkylphosphat und Dialkylpyrophosphat. Bevorzugte Titanate sind beispielsweise Tetrabutyl- oder Tetraisopropyltitanat.

Weiterhin geeignete Titanate weisen mindestens einen mehrzähnigen Liganden, auch Chelatligand genannt, und gegebenenfalls zusätzlich mindestens einen der vorstehend genannten Liganden auf. Der mehrzähnige Ligand ist bevorzugt ein zweizähniger Ligand. Ein Beispiel für einen zweckmäßigen Chelatliganden ist die Acetylacetonatgruppe.

Geeignete Titanate sind beispielsweise unter den Handelsnamen Tyzor^{®} AA, GBA, GBO, AA-75, AA-65, AA-105, DC, BEAT, IBAY von der Firma Dorf Ketal oder unter dem Handelsnamen Tytan^{®} PBT, TET, X85, TAA, ET, S2, S4 oder S6 von der Firma Borica kommerziell erhältlich.

Der Anteil des Katalysators kann in weiten Bereichen variieren, liegt aber z.B. im Bereich von 0,001 bis 10 Gew.-%, bevorzugt 0,005 bis 4 Gew.-%, bevorzugter 0,01 bis 3 Gew.-%, bezogen auf die gesamte Silikonformulierung.

Die Silikonformulierung kann ferner gegebenenfalls einen oder mehrere Weichmacher enthalten, wobei die für Silikone üblichen Weichmacher verwendet werden können. Beispiele für Weichmacher sind Polysiloxane, die keine reaktiven Gruppen oder gegebenenfalls nur eine reaktive Gruppe enthalten, und aliphatische oder aromatischer Kohlenwasserstoffe.

Bevorzugt werden als Weichmacher Polysiloxane, insbesondere Polydialkylsiloxane, die keine reaktiven Gruppen oder gegebenenfalls nur eine reaktive Gruppe enthalten, verwendet. Reaktive Gruppen sind dabei insbesondere an Si gebundene Hydroxylgruppen oder hydrolysierbare Gruppen wie vorstehend erläutert, die im Härtungsprozess an der Vernetzung teilnehmen können.

Als Polydialkylsiloxane, die keine reaktiven Gruppen oder gegebenenfalls nur eine reaktive Gruppe enthalten, die gegebenenfalls als Weichmacher eingesetzt werden können, sind insbesondere trialkylsilylterminierte Polydimethylsiloxane geeignet, wobei die trialkylsilylterminierten Polydimethylsiloxane bevorzugt eine Viskosität bei 23°C im Bereich von 1 bis 10'000 mPa.s, bevorzugter 10 bis 1'000 mPa.s, aufweisen. Es können auch z.B. trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind.

Obwohl besonders bevorzugt lineare trimethylsilylterminierte Polydimethylsiloxane als Weichmacher eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Das Polydimethylsiloxan kann gegebenenfalls auch monofunktionell sein, d.h. nur ein Ende ist trialkylsilylterminiert, während das andere Ende reaktiv ist, z.B. über eine Hydroxy-Endgruppe.

Der Anteil an Weichmacher kann, sofern eingesetzt, z.B. in einem Bereich von 1 bis 15 Gew.-%, bevorzugt 3 bis 10 Gew.-%, der gesamten Silikonformulierung liegen.

Es wurde aber überraschenderweise festgestellt, dass die mechanischen und elastischen Eigenschaften der gehärteten Silikonformulierungen auch bei hohen Temperaturen wenig bis gar nicht beeinträchtigt werden, wenn die Silikonformulierung im Wesentlichen frei von Weichmachern ist. In diesem Fall kann die Temperaturstabilität gegebenenfalls sogar noch weiter verbessert werden.

In einer bevorzugten Ausführungsform ist die Silkonformulierung daher im Wesentlichen frei von Polysiloxanen, die keine reaktiven Gruppen oder gegebenenfalls nur eine reaktive Gruppe enthalten, insbesondere Trimethylsilyl-terminierten Polydialkylsiloxanen, d.h. der Anteil von Polysiloxanen, die keine reaktiven Gruppen oder gegebenenfalls nur eine reaktive Gruppe enthalten, insbesondere von Trimethylsilyl-terminierten Polydialkylsiloxanen, beträgt bei dieser bevorzugten Ausführungsform weniger als 1 Gew.-%, bezogen auf das Gesamtgewicht der Silikonformulierung.

In einer bevorzugten Ausführungsform ist die Silkonformulierung im Wesentlichen frei von Weichmachern, d.h. die Gesamtmenge an Polysiloxanen, die keine reaktiven Gruppen oder gegebenenfalls nur eine reaktive Gruppe enthalten, insbesondere an Trimethylsilyl-terminierten Polydialkylsiloxanen, und/oder Kohlenwasserstoffen beträgt weniger als 1 Gew.-%, bezogen auf das Gesamtgewicht der Silikonformulierung.

Die Silkonformulierung kann gegebenenfalls einen oder mehrere Haftvermittler enthalten, was auch bevorzugt ist. Als Haftvermittler eignen sich z.B. Organoalkoxysilane, deren organische Reste vorzugsweise mit funktionellen Gruppen substituiert sind. Die funktionellen Gruppen sind z.B. Amino-, Mercapto- oder Glycidoxygruppen, wobei Amino- und/oder Glycidoxygruppen bevorzugt sind. Bei den Alkoxygruppen derartiger Organoalkoxysilane handelt es sich meist um (M)ethoxygruppen, d.h. Methoxy- oder Ethoxygruppen. Besonders bevorzugt sind 3-Aminopropyltri(m)ethoxysilan, 3-(2-Aminoethyl)-aminopropyltri(m)ethoxysilan, Glycidoxypropyltri(m)ethoxysilan und 3-Mercaptopropyltri(m)ethoxysilan. Es ist auch möglich, ein Gemisch von Haftvermittlern einzusetzen.

Die Herstellung der Silikonformulierung kann nach gängigen Mischverfahren erfolgen, z.B. in einem Zwangsmischer, Planetenmischer, Hauschild-Mischer, Lödige-Mischer, Mischrohr oder einem Extruder. Die Mischung kann diskontinuierlich oder kontinuierlich durchgeführt werden.

Bei der einkomponentigen Silikonformulierung werden alle Bestandteile in einer Komponente vermischt. Bei der zweikomponentigen Silikonformulierung werden die Bestandteile in zweckmäßigerweise aufgeteilt und zu zwei gesonderten Komponenten gemischt. Die beiden Komponenten werden gesondert gelagert. Für den Gebrauch werden die beiden Komponenten miteinander vermischt, in der Regel erst kurz vor dem Gebrauch.

Die Mischung der beiden Komponenten kann durch Mischen, Schütteln oder Zusammengießen oder ähnliche Homogenisierverfahren manuell oder mithilfe einer geeigneten Rührvorrichtung, z.B. mit einem Statikmischer, Dynamikmischer, Speedmixer, Dissolver etc., erfolgen. Die beiden Komponenten können auch für die Applikation oder Einbringung aus den getrennten Aufbewahrungsbehältern, z.B. mit Zahnradpumpen, ausgepresst und vermischt werden.

Die Silikonformulierung kann als Klebstoff oder Dichtstoff in einem Verfahren zum Verkleben oder Verfugen von Substraten verwendet werden, wobei das Verfahren umfasst
a) die Applikation der einkomponentigen Silikonformulierung oder der Mischung der Komponenten der zweikomponentigen Silikonformulierung auf ein Substrat und das Inkontaktbringen der auf dem Substrat applizierten Silkonformulierung oder Mischung mit einem weiteren Substrat, um eine Klebverbindung zwischen den Substraten zu erhalten, oder
   das Einbringen der einkomponentigen Silikonformulierung oder der Mischung der Komponenten der zweikomponentigen Silikonformulierung in eine Fuge zwischen zwei Substraten, um eine Verfugung oder Abdichtung zwischen den Substraten zu erhalten, und
b) das Härten der Silikonformulierung oder der Mischung mit Wasser, insbesondere Luftfeuchtigkeit.

Die Härtung erfolgt durch Anwesenheit von Wasser, das zugeführt werden kann oder bei der zweikomponentigen Silikonformulierung in einer Komponente enthalten sein kann. Die Härtung erfolgt aber bevorzugt durch Luftfeuchtigkeit, die in der Umgebung vorhanden ist.

Die Härtung kann z.B. bei einer Temperatur im Bereich von 4 bis 40°C durchgeführt werden.

Die Erfindung betrifft auch die gehärtete Silikonformulierung, die erhältlich ist durch Härtung der erfindungsgemäßen Silikonformulierung mit Wasser, insbesondere Luftfeuchtigkeit. Die mechanischen Eigenschaften der gehärteten Silikonformulierung werden nach einer Lagerung bei 250°C für 6 Wochen nicht signifikant beinträchtigt. Insbesondere werden die Zugfestigkeit und/oder die Shore A-Härte nach einer Lagerung bei 250°C für 6 Wochen bevorzugt um weniger als 25 % verringert. Ferner werden die die Zugfestigkeit und/oder die Shore A-Härte der gehärteten Silikonformulierung nach einer Lagerung bei 280°C für 7 Tage bevorzugt um weniger als 25 % verringert. Besonders bevorzugt werden die die Zugfestigkeit und/oder die Shore A-Härte der gehärteten Silikonformulierung nach einer Lagerung bei 300°C für 3 Tage um weniger als 25 % verringert. Die Zugfestigkeit und die Shore A-Härte werden dabei gemäß den in den Beispielen genannten Messmethoden bestimmt.

Es ist insbesondere bevorzugt, wenn eine hohe Temperaturstabilität hinsichtlich eine möglichst geringen Änderung der Zugfestigkeit erhalten wird.

Die erfindungsgemäßen Silikonformulierungen, insbesondere in Form einer ein- oder zweikomponentigen RTV-Silikonformulierung, eignen sich insbesondere als Klebstoffe, Dichtstoffe oder Vergussmassen.

Ein geeignetes Anwendungsgebiet für die erfindungsgemäße Silikonformulierung ist z.B. das Kleben oder Dichten von Substraten, z.B. aus Metall, einschließlich Buntmetall und Legierungen, Keramik, Glas oder Kunststoff, z.B. PVC, Polyamid, Polycarbonat, PET, glasfaserverstärktem Kunststoff (GRP) und kohlefaserverstärktem Kunststoff (CFRP).

Die erfindungsgemäßen Silikonformulierungen werden besonders bevorzugt als Kleb- oder Dichtstoffe für die Herstellung oder Reparatur von Fassaden, Brandschutzfugen, Fenstern, Isolierglas, Solaranlagen, Automobilen, Zügen, Bussen, Schiffen, weisser, brauner und roter Ware, elektronischen Bauteilen oder Sanitäranlagen oder allgemein für den Bau verwendet.

Die erfindungsgemäßen Silikonformulierungen eignen sich insbesondere als Klebstoffe oder Dichtstoffe für Hochtemperaturanwendungen, bei denen das verklebte oder abgedichtete Teil, insbesondere die gehärtete Silikonformulierung, zumindest zeitweise oder dauerhaft Temperaturen von mehr als 200°C und insbesondere mehr als 250°C ausgesetzt wird.

Die erfindungsgemäßen Silikonformulierungen eignen sich daher als elastische Kleb- und Dichtstoffe insbesondere überall dort, wo Bauteile kurzzeitig oder dauerhaft erhöhten Temperaturen ausgesetzt sind. Solche Bedingungen finden sich zum Beispiel im Automobil-Bereich, z.B. im Motorraum oder in den Auspuffleitungen, oder bei weißer, brauner oder roter Ware. So können die erfindungsgemäßen Silikonformulierungen z.B. beim Bau von Backöfen, Mikrowellen, Bügeleisen, Rundfunkempfängern, Radiatoren oder Wasserinstallationen Verwendung finden.

### Beispiele

Im Folgenden werden konkrete Ausführungsformen der Erfindung ausgeführt, die den Umfang der Erfindung aber nicht beschränken sollen. Sofern nicht anders angegeben, beziehen sich Mengen- und Prozentangaben auf das Gewicht.

### Messmethoden

Die Zugfestigkeit und die Bruchdehnung wurden gemäß DIN 53504 an Filmen mit einer Schichtdicke von 2 mm, welche 7 Tage bei 23 °C, 50 % relativer Luftfeuchtigkeit gelagert bzw. nach Vorlagerung von 7 Tagen bei 23 °C, 50 % relativer Luftfeuchtigkeit für 7 Tage bei 230°C in einem Ofen der Firma Binder FD53 erhöhter Temperatur ausgesetzt bzw. gelagert wurden, nach anschließender 1 tägiger Konditionierung bei 23 °C, 50 % relativer Luftfeuchtigkeit mit einer Messgeschwindigkeit von 200 mm/min auf einer Zugmaschine Zwick/Roell Z005 gemessen. Die angegebenen Werte sind die Mittelwerte von mindestens drei Messungen.

Die Shore A-Härte wurde bestimmt nach DIN 53505. Zur Bestimmung der Durchhärtung mittels Härteaufbau wurde die Shore A-Härte nach Lagerung der Probekörper, welche 7 Tage bei 23 °C, 50 % relativer Luftfeuchtigkeit gelagert bzw. nach Vorlagerung von 7 Tagen bei 23 °C, 50 % relativer Luftfeuchtigkeit für 7 Tage bei 230°C in einem Ofen der Firma Binder FD53 erhöhter Temperatur ausgesetzt bzw. gelagert wurden, nach anschließender 1 tägiger Konditionierung bei 23 °C, 50 % relativer Luftfeuchtigkeit gemessen. Die angegebenen Werte sind die Mittelwerte von mindestens fünf Messpunkten auf den jeweiligen Probekörpern jeweils auf der Vorder- und auf der Rückseite.

### Herstellung der Silikonformulierung

Die Bestandteile für die Komponenten A und B für die Vergleichsbeispiele 1 und 2 sowie die Beispiele 1 bis 3 wurden in den in der nachstehenden Tabelle 1 angegebenen Mengen (in %Gew./Gew. bezogen auf die jeweilige Komponente A oder B) eingewogen und mit einem Speedmixer der Firma Hauschild bei 23°C und 50% r.F. für 40 s bei 2000 U/min gemischt. Die Komponenten A und B wurden zu 300g in PP-Kartuschen abgefüllt und luftdicht verschlossen.

Die Komponenten A und B von Vergleichsbeispiel 1 und 2 sowie den Beispielen 1 bis 3 wurden jeweils in einem Gewichtsverhältnis von Komponente A zu Komponente B von 13:1 mittels Speedmixer der Firma Hauschild bei 23°C und 50% r.F. für 40 s bei 2000 U/min vermischt. Die Mischungen wurden zur Herstellung der Prüflinge verwendet, die anschließend gemäß der oben angegebenen Messmethoden getestet wurden. Die Ergebnisse sind in Tabelle 2 wiedergegeben.

**Tabelle 1**

| **Komponente A** | Vergleichsbeispiel 1 | Beispiel 1 | Vergleichsbeispiel 2 | Beispiel 2 | Beispiel 3 |
|---|---|---|---|---|---|
| OH-terminiertes Poly(dimethylsiloxan), Viskosität bei 23°C: 20'000 mPas | 44% | 44% | | | |
| OH-terminiertes Poly(dimethylsiloxan), Viskosität bei 23°C: 50'000 mPas | | | 52% | 52% | 54% |
| Trimethylsilyl-terminiertes Poly(dimethylsiloxan), Viskosität bei 23°C: 100 mPas | 8,8% | 8,6% | | | |
| Trimethylsilyl-terminiertes Poly(dimethylsiloxan), Viskosität bei 23°C: 10 mPas | | | 3,5% | 3,5% | |
| Silikonharz | 4,5% | 4,5% | 2,5% | 2,5% | |
| Ethylendiamin gestartetes EO-PO-Blockcopolymer, OH-Zahl: 130, Trübungspunkt: 75°C | 1% | 1% | | | 1% |
| Diatomeenerde, mit Vinyltrimethoxysilan behandelt | | 39,5% | | | |
| Natürliche Kreide, BET: 5 m²/g, D₅₀: 2µm | | | 10% | 30% | |
| Dolomitmarmor, Kornbereich 0-30µm | | | | | 32% |
| Flammkieselsäure, behandelt mit HMDS, BET: 150 m²/g | 2,2% | 2,2% | 5% | 5% | 13% |
| Magnesiumhydroxid, BET: 9-11 m²/g, D₅₀: 0,9-1,1µm | | | 20% | | |
| Aluminiumtrihydroxid, BET: 6m²/g | 39,5% | | | | |
| Industrieruss, BET: 85 m²/g | | 0,2% | 7% | 7% | |
| **Summe** | 100% | 100% | 100% | 100% | 100% |

| **Komponente B** | | | | | |
|---|---|---|---|---|---|
| Vinylsilan-terminiertes Poly(dimethylsiloxan), Viskosität bei 23°C: 20'000 mPas | 36% | 36% | 20% | 20% | |
| Ethylendiamin gestartetes EO-PO-Blockcopolymer, OH-Zahl: 130, Trübungspunkt: 75°C | | | | | 7% |
| Tetraethylorthosilicat | 6% | 6% | 8% | 8% | 20% |
| 1,2-Bis(triethoxysilyl)ethan | 25% | 25% | 31% | 31% | 27% |
| 2-Aminoethyl-3-aminopropyltriethoxysilan | 9,5% | 9,5% | 12,5% | 12,5% | 12,5% |
| Flammkieselsäure, BET: 150 m²/g | 14% | 14% | 5,5% | 5,5% | 17,5% |
| Industrieruss, BET: 115 m²/g | 9% | 9% | 22% | 22% | 15% |
| Di-n-butyl-zinn-diacetat | 0,5% | 0,5% | 1% | 1% | 1% |
| **Summe** | 100% | 100% | 100% | 100% | 100% |

**Tabelle 2**

| | Vergleichsbeispiel 1 | Beispiel 1 | Vergleichsbeispiel 2 | Beispiel 2 | Beispiel 3 |
|---|---|---|---|---|---|
| Shore A | 42 | 45 | 58 | 57 | 45 |
| Shore A nach 7d bei 230°C | 33 | 42 | 70 | 56 | 50 |
| Zugfestigkeit | 3,1 MPa | 2,8 MPa | 3,6 MPa | 2,9 MPa | 3,5 MPa |
| Zugfestigkeit nach 7d bei 230°C | 2,4 MPa | 2,9 MPa | 2,5 MPa | 2,1 MPa | 3,6 MPa |
| Bruchdehnung | 234 % | 182 % | 162 % | 162 % | 284 % |
| Bruchdehnung nach 7d bei 230°C | 233 % | 210 % | 64 % | 201 % | 170 % |

Aus den Beispielen wird deutlich, dass erfindungsgemässe Mischungen bei Lagerung unter erhöhter Temperatur eine verbesserte Stabilität zeigen. So zeigen erfindungsgemässe Mischungen keine grossen Veränderungen der Shore Härte (Erweichung oder Versprödung) sowie geringere Änderungen in Zugfestigkeit und Bruchdehnung.

## Patentansprüche

1. Silikonformulierung, umfassend
a) mindestens ein kondensationsvernetzbares Hydroxy- oder Alkoxy-terminiertes Polydiorganosiloxan,
b) mindestens einen Silan- oder Siloxan-Vernetzer für das Hydroxy- oder Alkoxy-terminierte Polydiorganosiloxan und
c) einen oder mehrere Füllstoffe, wobei ein Füllstoff der Hauptfüllstoff ist, der in einem größeren Gewichtsanteil als jeder andere gegebenenfalls vorhandene Füllstoff in der Silikonformulierung enthalten ist, und der Hauptfüllstoff eine Zersetzungstemperatur von mehr als 350°C aufweist, mit der Maßgabe, dass, bezogen auf das Gesamtgewicht der Füllstoffe, der Anteil des Hauptfüllstoffs mindestens 20 Gew.-% beträgt.

2. Silikonformulierung nach Anspruch 1, **dadurch gekennzeichnet, dass** der Hauptfüllstoff ausgewählt ist aus Dolomiten, Aluminiumoxiden, insbesondere Boehmit, Quarz, Cristobalit, Diatomeenerde oder Glimmer, wobei Dolomite und Diatomeenerde besonders bevorzugt sind, wobei der Hauptfüllstoff gegebenenfalls oberflächenmodifiziert ist.

3. Silikonformulierung nach Anspruch 1 oder 2, **dadurch gekennzeichnet, dass**, bezogen auf das Gesamtgewicht der Füllstoffe, der Anteil des Hauptfüllstoffs 20 bis 90 Gew.-%, bevorzugt 30 bis 90 Gew.-% und bevorzugter 50 bis 75 Gew.-% beträgt.

4. Silikonformulierung nach irgendeinem der Ansprüche 1 bis 3, **dadurch gekennzeichnet, dass**, bezogen auf das Gesamtgewicht der Silikonformulierung, der Gesamtanteil an Polysiloxanen, die keine reaktiven Gruppen oder nur eine reaktive Gruppe enthalten, insbesondere von Trimethylsilyl-terminierten Polydialkylsiloxanen, weniger als 1 Gew.-% beträgt.

5. Silikonformulierung nach irgendeinem der Ansprüche 1 bis 4, **dadurch gekennzeichnet, dass** die Silikonformulierung eine RTV 1-Silikonformulierung oder eine RTV 2-Silikonformulierung ist.

6. Silikonformulierung nach irgendeinem der Ansprüche 1 bis 5, **dadurch gekennzeichnet, dass** die Silikonformulierung neutral vernetzend ist.

7. Silikonformulierung nach irgendeinem der Ansprüche 1 bis 6, **dadurch gekennzeichnet, dass** die Silikonformulierung frei von Eisenoxid ist, wobei die Silikonformulierung bevorzugt frei von Eisenoxid und frei von Titanoxid ist.

8. Silikonformulierung nach irgendeinem der Ansprüche 1 bis 7, **dadurch gekennzeichnet, dass** das Hydroxy- oder Alkoxy-terminierte Polydiorganosiloxan ein Hydroxy- oder Alkoxy-terminiertes Polydialkylsiloxan, insbesondere ein Hydroxy- oder Alkoxy-terminiertes Polydimethylsiloxan, ist, welches bevorzugt eine Viskosität bei einer Temperatur von 23°C im Bereich von 10 bis 500'000 mPa·s, bevorzugt von 100 bis 350'000 mPa·s, aufweist.

9. Silikonformulierung nach irgendeinem der Ansprüche 1 bis 8, wobei der Silan- oder Siloxan-Vernetzer ein oder mehrere Organosilane mit drei oder mehr hydrolysierbaren Gruppen und/oder ein Hydrolyse- oder Kondensationsprodukt davon ist, wobei die hydrolysierbare Gruppe vorzugsweise aus einer Alkoxygruppe, Acetoxygruppen oder Ketoximogruppe ausgewählt ist.

10. Silikonformulierung nach irgendeinem der Ansprüche 1 bis 9, **dadurch gekennzeichnet, dass** das Hydroxy- oder Alkoxy-terminierte Polydiorganosiloxan ein lineares Hydroxy- oder Alkoxy-terminierte Polydiorganosiloxan, bevorzugt ein lineares Hydroxy- oder Alkoxy-terminiertes Polydialkylsiloxan, insbesondere ein lineares Hydroxy- oder Alkoxy-terminiertes Polydimethylsiloxan, ist, welches bevorzugt eine Viskosität bei einer Temperatur von 23°C im Bereich von 10 bis 500'000 mPa·s, bevorzugt von 100 bis 350'000 mPa·s, aufweist.

11. Verwendung einer Silikonformulierung nach irgendeinem der Ansprüche 1 bis 10 als Klebstoff, Dichtstoff oder Vergussmasse, insbesondere für die Herstellung oder Reparatur von Fassaden, Brandschutzfugen, Fenstern, Isolierglas, Solaranlagen, Automobilen, Zügen, Bussen, Schiffen, weisser, brauner und roter Ware, elektronischen Bauteilen oder Sanitäranlagen oder für den Bau, besonders bevorzugt für Fahrzeugteile aus dem Motor- oder Auspuffbereich, Backöfen, Mikrowellen, Bügeleisen, Rundfunkempfänger, Radiatoren und Wasserinstallationen.

12. Verwendung nach Anspruch 11 für Hochtemperaturanwendungen, bei denen die gehärtete Silikonformulierung zumindest zeitweise oder dauerhaft Temperaturen von mehr als 200°C und insbesondere mehr als 250°C ausgesetzt wird.

13. Gehärtete Silikonformulierung, erhältlich durch Härten einer Silikonformulierung nach irgendeinem der Ansprüche 1 bis 10 mit Wasser, insbesondere Luftfeuchtigkeit.

14. Gehärtete Silikonformulierung nach Anspruch 13, **dadurch gekennzeichnet, dass** sich die Zugfestigkeit und/oder die Shore A-Härte der gehärteten Silikonformulierung nach einer Lagerung bei 250°C für 6 Wochen, bevorzugt bei 280°C für 7 Tage und bevorzugter bei 300°C für 3 Tage um weniger als 25 % verringert.
